(19) Europäisches Patentamt
European Patent Office
Office européen des brevets

(11) **EP 1 410 240 B1**

(12) **FASCICULE DE BREVET EUROPEEN**

(45) Date de publication et mention de la délivrance du brevet:
**13.02.2008 Bulletin 2008/07**

(21) Numéro de dépôt: **02762507.8**

(22) Date de dépôt: **02.07.2002**

(51) Int Cl.:
***G06F 17/14*** *(2006.01)*

(86) Numéro de dépôt international:
**PCT/FR2002/002300**

(87) Numéro de publication internationale:
**WO 2003/005229 (16.01.2003 Gazette 2003/03)**

(54) **PROCEDE ET CIRCUIT D'ANALYSE FREQUENTIELLE EN TEMPS REEL D'UN SIGNAL NON STATIONNAIRE**

VERFAHREN UND SCHALTUNG ZUR ECHTZEIT-FREQUENZANALYSE EINES NICHTSTATIONÄREN SIGNALS

METHOD AND CIRCUIT FOR REAL TIME FREQUENCY ANALYSIS OF A NON-STATIONARY SIGNAL

(84) Etats contractants désignés:
**AT BE BG CH CY CZ DE DK EE ES FI FR GB GR IE IT LI LU MC NL PT SE SK TR**

(30) Priorité: **04.07.2001 FR 0108872**

(43) Date de publication de la demande:
**21.04.2004 Bulletin 2004/17**

(73) Titulaire: **AIRBUS France**
**31060 Toulouse Cedex 03 (FR)**

(72) Inventeur: **MICHEL, Patrice**
**F-31330 Merville (FR)**

(74) Mandataire: **Poulin, Gérard et al**
**BREVALEX**
**3, rue du Docteur Lancereaux**
**75008 Paris (FR)**

(56) Documents cités:
- LIN Z, CHEN JD: "ADVANCES IN TIME-FREQUENCY ANALYSIS OF BIOMEDICAL SIGNALS" CRITICAL REVIEWS IN BIOMEDICAL ENGINEERING, vol. 24, no. 1, 1996, pages 1-72, XP001065252
- SKAGEN D W: "Estimation of running frequency spectra using a Kalman filter algorithm (Time series of physiological variables)" JOURNAL OF BIOMEDICAL ENGINEERING, MAY 1988, UK, vol. 10, no. 3, pages 275-279, XP008001064 ISSN: 0141-5425
- PERDEY J ET AL.: "A REVIEW OF PARAMETRIC MODELLING TECHNIQUES FOR EEG ANALYSIS" MEDICAL ENGINEERING & PHYSICS, vol. 18, no. 1, 1996, pages 2-11, XP001065256
- A. TKACENKO ET AL.: "Sinusoidal Frequency Estimation Using Filter Banks" IEEE INT. CONF. ON ACOUSTIC, SPEECH AND SIGNAL PROCESSING, 11 mai 2001 (2001-05-11), pages 3089-3092, XP010803562
- F.G. RESENDE ET AL.: "Multi-Band Decomposition of the Linear Prediction Error Applied to Adaptive AR Spectral Estimation" IEICE TRANSACTIONS ON FUNDAMENTAL ELECTRONICS, COMMUNICATIONS AND COMPUTER SCIENCE, vol. E80-A, février 1997 (1997-02), pages 365-376, XP009077386

EP 1 410 240 B1

## Description

### Domaine technique

La présente invention a pour objet un procédé d'analyse fréquentielle en temps réel d'un signal non stationnaire et un circuit d'analyse correspondant. Par analyse "en temps réel", on entend une analyse où chaque information est traitée avant l'apparition de la suivante. Cette contrainte est beaucoup plus sévère que dans la technique habituelle où l'analyse "en temps réel" signifie que le traitement de l'information est réalisé sans enregistrement et dépouillement postérieur mais dans des délais qui ne sont pas nuls.

L'invention trouve une application en aéronautique (étude et contrôle des structures en vol), en électrodynamique (contrôle des machines productrices d'électricité), en mécanique (étude et contrôle de pièces mobiles), en automobile (contrôle des vibrations dans les véhicules), en sismique (étude des signaux utilisés en prospection pétrolière), en zoologie (étude des sons émis par les animaux), etc...

### Etat de la technique antérieure

Le signal que l'on souhaite analyser est composé d'un bruit auquel s'ajoutent un ou des signaux sinusoïdaux dont les fréquences et les amplitudes sont susceptibles de varier au cours du temps. Il s'agit de mesurer ces fréquences et ces amplitudes en temps réel. Une telle analyse est qualifiée parfois de "temps-fréquence".

On connaît de nombreuses méthodes d'analyse spectrale, la plus célèbre étant sans doute l'analyse de Fourier. Si cette analyse donne bien le spectre du signal, elle s'applique essentiellement à des signaux stationnaires ou variant lentement dans le temps. Elle ne convient donc pas, en général, à une analyse en temps réel.

La méthode consistant à limiter le signal dans une fenêtre glissante (par exemple une gaussienne comme l'a proposé GABOR), permet d'obtenir une représentation temps-fréquence, mais la précision de la localisation de chaque fréquence dans le temps reste insuffisante. Elle doit faire l'objet d'un compromis, car l'incertitude sur la localisation en fréquence et l'incertitude sur la localisation en temps sont liées (principe dit d'incertitude de HEISENBERG-GABOR).

La transformation en ondelettes est également largement connue. Il s'agit d'un outil d'analyse qui présente un bon compromis entre la localisation fréquentielle et la localisation temporelle. Mais il s'agit davantage d'une analyse temps-échelle que d'une analyse temps-fréquence. En outre, elle se heurte à une difficulté de mise en adéquation de l'ondelette et de la fréquence.

Le document : Bonacci D, Mailhes C, Djuric P M, "Improving frequency resolution for correlation-based spectral estimation methods using subband decomposition" Proceedings of International Conference on Acoustics, Speech and Signal Processing (ICASSP'03), 6-10 April 2003, Hong Kong, China, vol. 6, pages VI - 329-332, décrit une méthode d'analyse spectrale, qui s'applique uniquement à des signaux stationnaires, consistant à décomposer le signal échantillonné et numérisé en sous-bandes.

Il existe en définitive très peu de méthodes d'analyse de signaux non-stationnaires en temps réel. La raison en est sans doute que le besoin n'est pas si fréquent car, dans l'immense majorité des cas, on peut enregistrer le signal à analyser et l'étudier ensuite à son gré. Par ailleurs, si des méthodes d'analyse en temps réel existent, il s'agit de méthodes de laboratoire, où les contraintes liées par exemple à l'embarquement du matériel, à la réduction du coût, à la facilité de mise en oeuvre, etc..., n'existent pas.

La présente invention a justement pour but de remédier à cette carence en proposant un procédé d'analyse spécialement adapté à de telles contraintes.

### Exposé de l'invention

A cette fin, l'invention propose une combinaison particulière de traitements qui répond à ce besoin.

De manière plus précise, la présente invention a pour objet un procédé d'analyse fréquentielle en temps réel d'un signal non stationnaire, caractérisé en ce qu'il comprend les opérations suivantes :

A) on échantillonne le signal à une fréquence (fe) au moins égale à deux fois la plus haute fréquence prévue et on numérise les échantillons obtenus,

B) on décompose le signal échantillonné et numérisé en sous-bandes en appliquant les échantillons à une batterie de filtres numériques ayant des bandes passantes adjacentes,

C) on modélise le signal dans chaque sous-bande par un filtre autorégressif dont la fonction de transfert est $1/A(z)$, où $A(z)$ est un polynôme de la variable complexe $z=\exp(j2\pi f/fe)$ en mettant en oeuvre une méthode adaptative récursive en temps et en ordre, on calcule tous les polynômes $A(z)$ ayant un degré compris entre 1 et une valeur maximale choisie à l'avance,

D) on estime l'ordre du modèle et on retient parmi tous les polynômes calculés celui qui possède cet ordre,

E) on calcule, par un algorithme récursif, au moins certaines racines complexes du polynôme choisi,

F) à partir de la phase des racines obtenues, on détermine les fréquences correspondantes, on effectue un suivi des composantes sinusoïdales en calculant, dans un plan fréquence-amplitude, le carré de la distance séparant un point courant correspondant à une composante à un instant d'échantillonnage aux points obtenus à l'instant d'échantillonnage précédent, on fait correspondre au point courant le point antérieur qui minimise ce carré et on lie les différents points en minimisant une fonction pondérée de ces carrés ; et à partir des fréquences, on recherche les amplitudes des composantes sinusoïdales ayant ces fréquences et qui minimisent l'erreur quadratique entre la somme de ces composantes et le signal à analyser. On obtient ainsi les amplitudes des diverses composantes sinusoïdales du signal dans la sous-bande traitée.

De manière avantageuse, après avoir décomposé le signal échantillonné et numérisé en sous-bandes, on étale en fréquence chaque sous-bande avant la modélisation.

L'invention a également pour objet un circuit d'analyse qui met en oeuvre le procédé qui vient d'être décrit.

**Brève description des dessins**

- les figures 1A, 1B illustrent deux exemples de signaux non stationnaires à analyser en temps réel ;
- la figure 2 montre deux réponses fréquentielles de filtres en quadrature à réponse impulsionnelle finie ;
- la figure 3 montre deux réponses fréquentielles de filtres en quadrature à réponse impulsionnelle infinie ;
- la figure 4 illustre un banc de filtres pour une décomposition en 8 sous-bandes ;
- la figure 5 illustre schématiquement le cas de deux modes sinusoïdaux de fréquences proches situées dans la quatrième sous-bande ;
- la figure 6 montre l'effet de l'étalement de la quatrième sous-bande ;
- la figure 7A montre les variations d'un critère MAP permettant d'estimer l'ordre du modèle et la figure 7B les variations de deux autres critères (AIC, MDL) ;
- les figures 8A et 8B montrent deux exemples de loi gamma ;
- la figure 9 montre les variations de la probabilité de détection en fonction de la probabilité de fausse alarme pour trois rapports signal sur bruit (10 dB, 20 dB, 30 dB) ;
- les figures 10A, 10B et 10C montrent l'évolution des modes dans le temps et illustrent la question du suivi de ces modes ;
- la figure 11 montre un schéma synoptique d'un circuit d'analyse pour la mise en oeuvre du procédé.

**Description détaillée de modes particuliers de mise en oeuvre**

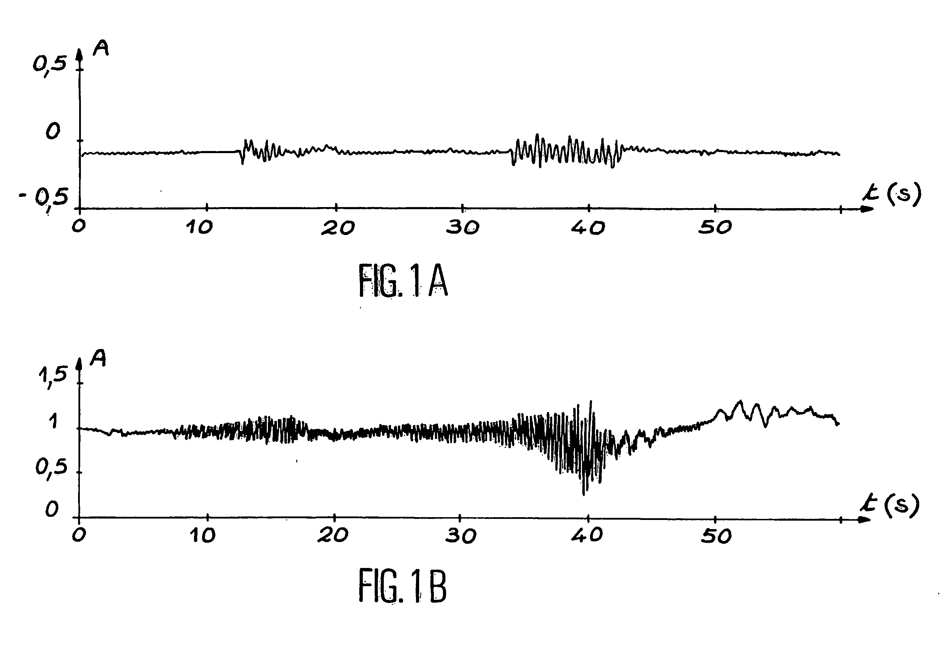

Les signaux à analyser peuvent être de natures et d'origines très diverses. Sur les figures 1A et 1B, on voit deux exemples de tels signaux, qui s'étendent sur une cinquantaine de secondes, et qui correspondent à des signaux mesurés sur des structures d'avion A 340 en vol.

L'analyse en temps réel de ce genre de signaux peut s'effectuer selon l'invention par la mise en oeuvre des opérations déjà définies.

**A) Echantillonnage et numérisation**

Le procédé d'analyse de l'invention comprend une première opération qui est un échantillonnage et une numérisation des échantillons. Si la bande occupée a priori par le signal s'étend de 0 à une valeur fm, autrement dit si la plus haute fréquence attendue est égale à fm, on échantillonne le signal à une fréquence fe égale à 2 fm, conformément au théorème de SHANON. On numérise ensuite chaque échantillon et l'on obtient ainsi, à chaque instant d'échantillonnage $t_n$, un échantillon numérique $S_n$, sachant qu'on dispose à cet instant des échantillons antérieurs $S_{n-1}$, $S_{n-2}$, ... qui ont été mémorisés, où l'intervalle d'échantillonnage $t_i$-$t_{i-1}$ est égal à $1/f_e$.

**B) Décomposition en sous-bandes**

La seconde opération consiste en un filtrage du signal. Ce filtrage vise à décomposer le spectre en sous-bandes. Pour cela, on applique le signal échantillonné et numérisé à une batterie de filtres numériques dont les bandes passantes sont adjacentes et dont la réunion reconstitue la bande totale de 0 à fm. De manière avantageuse, toutes les sous-bandes ont même largeur.

Les filtres utilisés peuvent être soit des filtres à réponse impulsionnelle finie (RIF) (autrement dit à support compact), soit des filtres à réponse impulsionnelle infinie (RII) (à support non compact).

On rappelle qu'un filtre numérique à réponse impulsionnelle finie (RIF) est un système linéaire défini par une équation récurrente selon laquelle un nombre de sortie, représentant un échantillon du signal filtré, est obtenu par sommation pondérée d'un ensemble fini de nombres d'entrées, représentant les échantillons du signal à filtrer. Les coefficients de la sommation pondérée constituent la réponse impulsionnelle du filtre.

Un filtre numérique à réponse impulsionnelle infinie (RII) est un système linéaire défini par une équation portant sur une infinité de termes. Chaque élément de la suite des nombres de sortie est calculé par sommation pondérée d'un certain nombre d'éléments de la suite d'entrée et d'un certain nombre d'éléments de la suite de sortie précédents.

Ces filtres peuvent se définir par leur fonction de transfert notée H(z) où z est une variable complexe égale à $\exp(j2\hat{\pi}\hat{f})$ où $\hat{f}$ est la fréquence réduite égale à f/fe où fe est la fréquence d'échantillonnage.

La fonction de transfert d'un filtre à réponse impulsionnelle finie est de la forme:

$$H(z) = \sum_{i=0}^{N-1} a_i z^{-i} \, , \qquad\qquad (1)$$

et celle d'un filtre à réponse impulsionnelle infinie de la forme:

$$H(z) = \frac{\displaystyle\sum_{\ell=0}^{L} b_\ell z^{-\ell}}{1 + \displaystyle\sum_{k=1}^{K} a_k z^{-k}} \, , \qquad\qquad (2)$$

soit encore $H(z) = \dfrac{B(z)}{A(z)}$ .

Les zéros du polynôme A(z) sont les pôles de la fonction de transfert.

Un grand nombre de filtres RIF sont utilisables dans l'invention et notamment les filtres rencontrés dans l'analyse en ondelettes.

### B.1. Décomposition par filtres RIF

Cette décomposition utilise, par exemple, un filtre passe-bas, noté H, associé à une fonction d'échelle $\phi$ et un filtre passe-haut G associé à l'ondelette $\Psi$. Les deux filtres se complètent et forment des filtres dits "miroirs en quadrature" (ou QMF en abrégé).

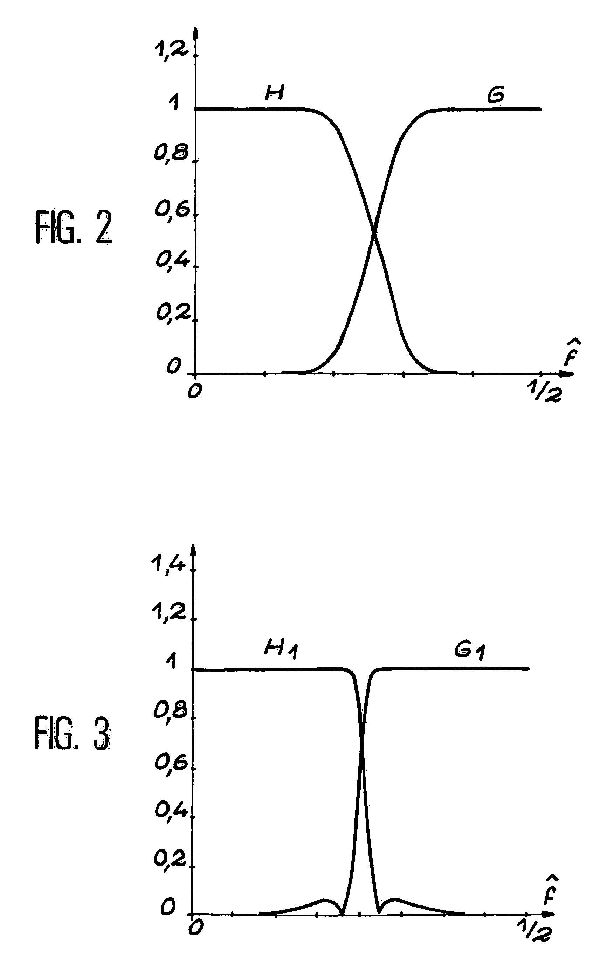

La figure 2 annexée illustre un exemple de réponse fréquentielle de filtres miroirs en quadrature de type DAUBECHIES à 20 coefficients. L'axe des abscisses s'étend de 0 à fe/2, autrement dit de 0 à 1/2 en fréquence réduite $\hat{f}$. L'ordonnée représente le gain du filtre.

Dans ce cas, la fonction de transfert H(z) s'écrit :

$$H(z) = \sum_{n=0}^{19} h_n z^n$$

avec 20 coefficients $h_n$ donnés dans le tableau I.

Tableau I

| | |
|---|---|
| $h_0$ = 0,0266700579005473 | $h_{10}$ = -0,0294575368218399 |
| $h_1$ = 0,1881768000776347 | $h_{11}$ = 0,0332126740593612 |
| $h_2$ = 0,5272011889315757 | $h_{12}$ = 0,0036065535669870 |

(suite)

| | |
|---|---|
| $h_3 = 0{,}6884590394534363$ | $h_{13} = -0{,}0107331754833007$ |
| $h_4 = 0{,}2811723436605715$ | $h_{14} = 0{,}0013953517470688$ |
| $h_5 = -0{,}2498464243271598$ | $h_{15} = 0{,}0019924052951925$ |
| $h_6 = -0{,}1959462743772862$ | $h_{16} = -0{,}0006858566949564$ |
| $h_7 = 0{,}1273693403357541$ | $h_{17} = -0{,}0001164668551285$ |
| $h_8 = 0{,}0930573646035547$ | $h_{18} = 0{,}0000935886703202$ |
| $h_9 = -0{,}0713941471663501$ | $h_{19} = -0{,}0000132642028945$ |

Les coefficients $g_n$ du filtre complémentaire G s'obtiennent à partir des coefficients $h_n$ par la relation :

$$g_n = (-1)^n h_{l-n} \qquad\qquad (3)$$

**B.2. Décomposition par filtres RII**

Si les filtres à réponse impulsionnelle finie sont intéressants, ils n'en présentent pas moins un inconvénient lié au recouvrement des deux sous-bandes adjacentes. Ce recouvrement crée une zone "aveugle" où l'estimation d'une composante tombant dans cette zone devient difficile.

On peut donc préférer utiliser des filtres à réponse impulsionnelle infinie (à support non compact) qui permettent d'obtenir une coupure plus franche.

A titre d'exemple, on peut choisir:

i) pour l'un des filtres, H, une fonction de transfert du type de celle de la relation (2) où le numérateur est un polynôme à 10 coefficients donnés dans le tableau II et où le dénominateur est un polynôme à 9 coefficients donnés dans le tableau II.

TABLEAU II

| Numérateur H |
|---|
| - 0,5 |
| - 2,43816568111942 |
| - 20,5029786833857 |
| - 53,3805738812567 |
| - 79,1939879946774 |
| - 79,1939879946774 |
| - 53,3805738812567 |
| - 20,5029786833857 |
| - 2,43816568111942 |
| 0,5 |

TABLEAU III

| Dénominateur H |
|---|
| - 122,517147003135 |
| 0 |
| - 146,958674436377 |
| 0 |
| - 39,7869615638926 |
| 0 |
| - 0,808430692907934 |
| 0 |

(suite)

| Dénominateur H |
| --- |
| 0,039801215434065 |

ii) pour l'autre filtre, G, on choisira une fonction de transfert où le numérateur est un polynôme également à 10 coefficients (données dans le tableau IV) et où le dénominateur est un polynôme à 9 coefficients (donnés dans le tableau V) :

TABLEAU IV

| Numérateur G |
| --- |
| - 0,5 |
| - 2,43816568111942 |
| - 20,5029786833857 |
| - 53,3805738812567 |
| - 79,1939879946774 |
| - 79,1939879946774 |
| - 53,3805738812567 |
| - 20,5029786833857 |
| - 2,43816568111942 |
| 0,5 |

TABLEAU V

| Dénominateur G |
| --- |
| - 122,517147003135 |
| 0 |
| - 146,958674436377 |
| 0 |
| - 39,7869615638926 |
| 0 |
| - 0,808430692907934 |
| 0 |
| 0,039801215434065 |

Les fonctions de transfert de ces deux filtres $H_1$ et $G_1$ sont représentées sur la figure 3.

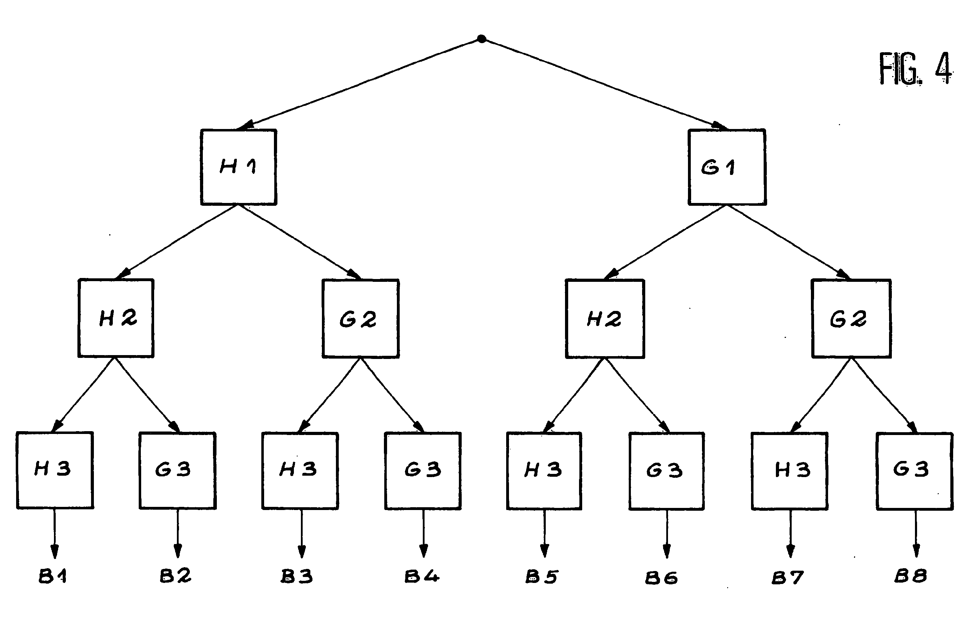

Un exemple de banc de filtres en cascade comprenant trois étages constitués respectivement de 2, 4 et 8 filtres est illustré sur la figure 4. On obtient ainsi 8 sous-bandes B1, B2, B3, ..., B8.

Les bancs de $2^k$ filtres identiques conviennent bien si on souhaite mettre à profit les coefficients de la décomposition. De ce fait, ils sont dimensionnés sous la contrainte de satisfaire à un ensemble d'équations. Le choix d'un banc de filtres qui ne présentent pas cette propriété présente l'avantage d'offrir plus de souplesse pour le dimensionnement de chacun des filtres (placement des pôles, gabarit).

Les bancs de filtres à $2^k$ filtres conviennent bien aux cas des filtres à réponse impulsionnelle finie. Pour les filtres à réponse impulsionnelle infinie, on peut utiliser un seul étage avec un nombre quelconque de filtres, non nécessairement égal à $2^k$, par exemple 7 filtres. Ces filtres doivent alors, pour pouvoir décimer sans recouvrement, être suivis de filtres de HILBERT, qui sont des filtres dont la réponse en fréquence est égale à +j pour les fréquences négatives et -j pour les fréquences positives, ce qui correspond à une mise en quadrature.

**Etalement des sous-bandes**

Dans une variante avantageuse de l'invention, après avoir décomposé le signal échantillonné et numérisé en sous-bandes, on étale chaque sous-bande avant de modéliser le signal. Chaque sous-bande possède une largeur égale à fe/2 divisée par le nombre de sous-bandes, soit fe/2B. On étale toutes les sous-bandes ou seulement certaines d'entre elles. On peut s'y prendre en prenant en compte un échantillon sur B, (opération que, dans cette technique, on appelle "décimation" même si B n'est pas égal à 10). Tout se passe comme si l'on comprimait temporellement le signal, autrement dit comme si l'on étirait son spectre dans le rapport B. La bande s'étale alors entre 0 et fe/2.

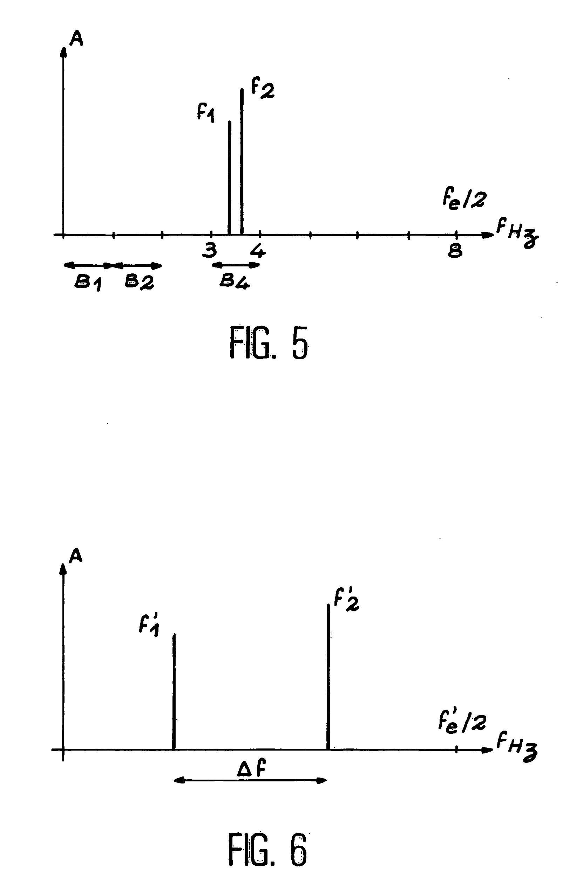

La figure 5 montre ainsi, à titre d'exemple, le cas d'un signal, sans bruit, échantillonné à la fréquence $f_e=16$ Hz et décomposé en B=8 bandes. Chaque sous-bande possède une largeur de 1 Hz et l'ensemble s'étale entre 0 et 8 Hz. Ce signal est supposé contenir deux composantes sinusoïdales à des fréquences $f_1$ et $f_2$ situées à l'intérieur de la quatrième sous-bande B4. On a par exemple $f_1=3,5$ Hz et $f_2=3,6$ Hz.

Ces deux fréquences $f_1$ et $f_2$ sont distantes de $\Delta f=0,1$ Hz. Comme $\Delta f$ est petit devant la fréquence d'échantillonnage $f_e$, il est difficile de les distinguer (surtout si le niveau de bruit est relativement élevé). On ne prélève alors qu'un seul échantillon sur huit. C'est donc comme si on échantillonnait à la fréquence $f_e/8=2$ Hz $= f'_e$. On obtient donc une fréquence maximale du spectre de 1 Hz. D'où le nouveau signal représenté sur la figure 6 dont le spectre s'étale de 0 à 1 Hz.

Les fréquences $f'_1$ et $f'_2$ sont différentes de $f_1$ et $f_2$ mais on sait retrouver $f_1$ et $f_2$ à partir de $f'_1$ et $f'_2$ parce qu'on connaît la bande de fréquence dont elles sont issues. L'analyse de ce nouveau signal est beaucoup plus facile car $f'_1$ et $f'_2$ sont toujours distantes de $\Delta f$ mais maintenant $\Delta f$ n'est plus petit devant $f'_e$.

## C) Modélisation

La modélisation d'un signal est un problème qui occupe une place importante en traitement de signal. Parmi toutes les techniques connues, les modèles dits paramétriques semblent bien adaptés aux contraintes rencontrées dans la présente invention. La modélisation paramétrique consiste à associer à un signal un ensemble de paramètres constituant ce qu'on appelle "vecteur de paramètres". Ce vecteur caractérise au mieux le signal au sens d'un certain critère d'erreur. Ce type de modèle présente plusieurs avantages : d'abord, on sait en extraire certaines informations pour obtenir, par exemple, une analyse spectrale. Ensuite, on connaît des algorithmes récursifs en temps et en ordre qui permettent d'estimer en temps réel les paramètres du modèle. Enfin, on peut réduire l'espace de représentation en représentant un ensemble de N échantillons par un vecteur de dimension p très inférieur à N.

Un système linéaire peut être modélisé par un filtre RII de fonction de transfert :

$$H(z) = \frac{1}{A(z)} , \qquad\qquad (4)$$

où A(z) est un polynôme dont le degré définit l'ordre du modèle. Le modèle est dit autorégressif (ou AR en abrégé) si l'entrée du modèle est un bruit blanc.

De nombreux signaux échantillonnés x(n) peuvent se représenter comme la sortie d'un filtre AR excité par un bruit blanc e(n). On peut donc écrire :

$$x(n) = \sum_{k=1}^{N} a(k)x(n-k) + e(n) , \qquad\qquad (5)$$

où e(n) est le bruit blanc.

Ce type de modélisation est directement lié à la prédiction linéaire avant qui, à partir de N échantillons passés, fait correspondre une estimée $\hat{x}(n)$ de l'échantillon à l'instant n par la relation :

$$\hat{x}(n) = \sum_{k=1}^{N} a_m x(n-k) . \qquad\qquad (6)$$

L'échantillon x(n) apparaît comme étant composé du terme prédit $\hat{x}(n)$ et du bruit e(n), imprédictible, et orthogonal à X(n) (et que l'on appelle parfois "l'innovation", au sens où ce terme introduit dans la suite établie des échantillons quelque chose de nouveau) :

$$x(n) = \hat{x}(n) + e(n) \, . \qquad (7)$$

Dans la prédiction linéaire avant, chaque échantillon peut donc s'exprimer par la relation :

$$x(n) = \left( \sum_{k=1}^{N} a_{(k)} x_{(n-k)} \right) + e(n) \qquad (8)$$

qui est, à l'évidence, la relation (5) donnant la sortie du filtre AR.

L'ensemble des coefficients a(k), que l'on peut noter sous forme d'un vecteur à N composantes, soit $\underline{A}^N$, définit donc le polynôme A(z) du modèle autorégressif recherché. La variance de l'erreur de prédiction linéaire avant est donnée par la relation suivante :

$$E\left[e^2(n)\right] = E\left[(x(n) - \hat{x}(n))^2\right] = E\left[(x_{(n)} - \underline{x}_{n-1}^{N})^t \, \underline{A}^N)^2\right] \qquad (9)$$

En minimisant cette variance, ce qui correspond à un blanchiment de l'erreur, on obtient l'équation dite de Yule-Walker dont la solution donne le vecteur de paramètres $\underline{A}^N$.

Calcul des polynômes par un algorithme adaptatif récursif en temps et en ordre

Une approche adaptative permet de résoudre différemment ce problème. Dans ce cas, on définit une fonction J dite "de coût". Généralement construite à partir du carré de l'erreur, elle a pour expression :

$$J = \sum_{k=1}^{n} \lambda^{n-k} e_k^2$$

où $\lambda$ est un facteur pondérant les erreurs commises avant l'instant. Ce facteur dit "d'oubli" décroît exponentiellement et privilégie les dernières acquisitions. On peut chercher, à chaque instant (n), le vecteur $\underline{A}_n^N$ qui minimise ce critère.

Les méthodes adaptatives visent à optimiser à chaque instant un vecteur de paramètres en minimisant le critère J. Elles présentent, de ce fait, l'avantage de permettre une adaptation des paramètres en fonction des évolutions du signal.

L'invention retient les algorithmes dits des moindres carrés rapides car ils sont bien adaptés à l'analyse en temps réel. Parmi ces algorithmes, l'invention retient plus spécialement les algorithmes où une récurrence est établie en temps et en ordre (et non pas seulement en temps), ce qui est bien adapté aux cas où l'ordre ne peut être fixé à l'avance. Ces algorithmes conduisent à des structures en treillis modulaires, de sorte qu'un étage peut être ajouté à une structure sans que cela modifie l'architecture globale du système.

On ne donnera ici que les grandes lignes de la théorie de l'algorithme adaptatif des moindres carrés rapide et les formules de récurrence qui permettent de calculer les coefficients recherchés.

Les notations utilisées sont les suivantes :

$N$ : Ordre de la modélisation

$\hat{X}_n$ : Estimé de l'échantillon $X_n$

$\underline{X}_n^N$ : Vecteur de dimension N construit à partir des N dernières composantes du signal, $\left(\underline{x}_n^N\right)^t = (X_n, X_{n-1}, ..., X_{n-N+1})$

$\underline{A}_n^N$ : Vecteur de prédiction linéaire avant (paramètres AR) à l'instant n, $\left(\underline{A}_n^N\right)^t = (a_{k,n}, a_{k-1,n}, ..., a_{k-N+1,n})$

$\underline{B}_n^N$ : Vecteur de prédiction linéaire arrière à l'instant n, $\left(\underline{B}_n^N\right)^t = (b_{k,n}, b_{k-1,n}, ..., b_{k-N+1,n})$

$E_{a,n}^N$ : Puissance de l'erreur de prédiction linéaire avant

$E_{b,n}^{N}$ :     Puissance de l'erreur de prédiction linéaire arrière

$\varepsilon_{a,n}^{N}$ :     Erreur de prédiction linéaire avant a posteriori

$\varepsilon_{b,n}^{N}$ :     Erreur de prédiction linéaire arrière a posteriori

$e_{b,n}^{N}$ :     Erreur de prédiction linéaire arrière a priori

$e_{a,n}^{N}$ :     Erreur de prédiction linéaire avant a priori

$k_{b,n}^{N}$ :     Coefficients de réflexion (parcor) fonction de la puissance de l'erreur de prédiction arrière

$k_{a,n}^{N}$ :     Coefficients de réflexion (parcor) fonction de la puissance de l'erreur de prédiction avant

$R_{n}^{N}$ :     Matrice de corrélation

$\underline{K}_{n}^{N}$ :     Gain de Kalman

$\lambda$:     Facteur d'oubli

Delta :     Constante positive

Comme déjà expliqué, la modélisation d'un signal par un vecteur de paramètres $\underline{A}^{N}$ (dont les composantes sont $a_1$, $a_2$, ..., $a_N$) revient à trouver la fonction de transfert de la forme $1/A(z)$, où $A(z)$ est un polynôme de degré N dont les coefficients sont $a_1$, $a_2$, ... , $a_N$. Le vecteur $\underline{A}^{N}$ recherché n'est donc autre que le modèle autorégressif associé aux échantillons $x_n$. Conformément à la relation (10), la fonction coût minimisée est :

$$E_{a,n}^{N} = \sum_{k=1}^{N} \lambda^{n-k} e_k^2 = \sum_{k=1}^{n} \lambda^{n-k} \left[ x_k - (\underline{x}_{k-1}^{N})^t \underline{A}_n^{N} \right]^2 \qquad (11)$$

où $\lambda$, facteur d'oubli ou d'adaptation, est inférieur à l'unité et très supérieur à 0. Ce type de pondération exponentielle privilégie les dernières acquisitions, mais introduit un biais sur l'estimation (en prenant $\lambda=1$ on retomberait sur un traitement stationnaire des échantillons).

En minimisant $E_{a,n}^{N}$ , on trouve les relations de récurrence recherchées. Selon l'invention, la récurrence sur l'ordre est décorrélée de la récurrence sur le temps. On estime donc, à chaque instant, tous les polynômes autorégressifs AR jusqu'à un ordre maximum $N_{max}$ fixé a priori en fonction de la connaissance que l'on peut avoir du signal à analyser.

La récurrence est la suivante :

a) on commence par t=1 en fixant une limite $t \leq t_{max}$ et l'on calcule pour N=1 et $N \leq N_{max}$ les paramètres recherchés à partir de la connaissance du modèle d'ordre N-1 (pour N=0 le modèle est égal à 1) ; puis on passe à l'ordre suivant N+1=2, etc... jusqu'à ce que l'on atteigne $N_{max}$ ; c'est la récurrence en ordre ;
b) on passe alors à t+1 et l'on réitère les calculs sur l'ordre (N=1, N=2, ...N=$N_{max}$);
c) on réitère ces opérations jusqu'à atteindre t=$t_{max}$.

Le tableau VI donne les quantités dont on a besoin pour calculer le vecteur $\underline{A}^{N}$ et le tableau VII les relations permettant le calcul des coefficients des polynômes AR.

Tableau VI

| |
|---|
| t=1 et $t \leq n_{max}$<br>N=1 et $N \leq N_{max}$ |
| $E_{a,n}^{N-1} = \lambda E_{a,n-1}^{N-1} + (e_{a,n}^{N-1})^2 \varphi_{n-1}^{N-1}$   énergie cumulée de prédiction avant |
| $E_{b,n-1}^{N-1} = \lambda E_{b,n-2}^{N-1} + (e_{a,n-1}^{N-1})^2 \varphi_{n-1}^{N-1}$   énergie cumulée de prédiction arrière |

(suite)

| | |
|---|---|
| $$e_{a,n}^{N} = e_{a,n}^{N-1} - k_{b,n-1}^{N} e_{b,n-1}^{N-1}$$ | erreur de prédiction avant a priori |
| $$e_{b,n}^{N} = e_{b,n-1}^{N-1} - k_{a,n-1}^{N} e_{a,n}^{N-1}$$ | erreur de prédiction avant a posteriori |
| $$k_{a,n}^{N} = k_{a,n-1}^{N} + \varphi_{n-1}^{N-1} \frac{e_{a,n}^{N-1} e_{b,n}^{N}}{E_{a,n}^{N-1}}$$ | coefficient de réflexion |
| $$k_{b,n}^{N} = k_{b,n-1}^{N} + \varphi_{n-1}^{N-1} \frac{e_{b,n-1}^{N-1} e_{a,n}^{N}}{E_{b,n-1}^{N-1}}$$ | coefficient de réflexion |
| $$\varphi_{n-1}^{N} = \varphi_{n-1}^{N-1} - (\varphi_{n-1}^{N-1})^2 \frac{(e_{b,n-1}^{N-1})^2}{E_{b,n-1}^{N-1}}$$ | |
| N=N+1 <br> t=t+1 | |

Tableau VII

t=1 et t<$n_{max}$

N=1 et N<$N_{max}$

$$\underline{A}_{n+1}^{N+1} = \begin{bmatrix} \underline{A}_{n+1}^{N} \\ 0 \end{bmatrix} - k_{b,n+1}^{N+1} \begin{bmatrix} \underline{B}_{n+1}^{N} \\ -1 \end{bmatrix} + k_{b,n+1}^{N+1} e_{b,n+1}^{N} \begin{bmatrix} \underline{K}_{n+1}^{N} \\ -1 \end{bmatrix}$$

$$\underline{B}_{n+1}^{N+1} = \begin{bmatrix} 0 \\ \underline{B}_{n+1}^{N} \end{bmatrix} - e_{b,n+1}^{N} \begin{bmatrix} 0 \\ \underline{K}_{n+1}^{N} \end{bmatrix} - k_{a,n+1}^{N+1} \begin{bmatrix} -1 \\ \underline{A}_{n+1}^{N} \end{bmatrix}$$

$$\underline{K}_{n+1}^{N+1} = \begin{bmatrix} \underline{K}_{n+1}^{N} \\ 0 \end{bmatrix} + \varphi_{n+1}^{N} \frac{e_{b,n+1}^{N}}{E_{b,n+1}^{N}} \begin{bmatrix} -\underline{B}_{n+1}^{N} \\ 1 \end{bmatrix}$$

N=N+1

t=t+1

A chaque instant, on dispose donc de ($N_{max}$-1) ensembles de coefficients qui définissent autant de polynômes A(z). On peut représenter ces ensembles sous forme d'une matrice comme dans le tableau VIII.

$$\begin{pmatrix} a_0^0 & 0 & 0 & ... & 0 \\ a_1^0 & a_1^1 & 0 & ... & 0 \\ a_2^0 & a_2^1 & a_2^2 & ... & 0 \\ ... & ... & ... & ... & 0 \\ a_N^0 & a_N^1 & & ... & a_N^N \end{pmatrix} = (a_j^i)$$

**Tableau VIII**

La matrice est triangulaire inférieure. Le modèle d'ordre N est :

$$A^N(z) = \sum_{j=0}^{N} a_N^j Z^{-j} = a_N^0 + a_N^1 Z^{-1} + ... + a_N^N Z^{-N}$$

.

**D) Estimation de l'ordre du modèle**

On suppose que le signal à analyser contient un certain nombre K de composantes sinusoïdales noyées dans du bruit. Le problème est d'estimer ce nombre K. La question n'est pas nouvelle, mais a surtout été abordée pour les signaux stationnaires. Dans la présente invention, il s'agit d'analyser des signaux non stationnaires et, qui plus est, en temps réel. La méthode d'estimation doit donc être adaptée à ces contraintes. On remarquera que pour une structure donnée, l'ordre du modèle change peu. Il ne change que lors de l'apparition ou de la disparition d'un mode. Tel n'est pas le cas pour les paramètres du modèle, qui doivent être réajustés à chaque échantillon. L'estimation de l'ordre du modèle est donc spécifique et disjointe du calcul des coefficients.

Le choix de l'ordre du modèle, c'est-à-dire du nombre de paramètres le définissant, reste un problème délicat et constitue la principale difficulté de mise en oeuvre de ce type de modélisation. Une dimension trop faible conduit à un modèle peu pertinent ; mais une dimension trop grande conduit à une charge excessive de calculs. Deux méthodes différentes sont prévues pour estimer l'ordre, l'une fondée sur un critère de probabilité (MAP) et l'autre sur une loi des modules.

**D1. Estimation à partir d'un critère MAP**

La nature non stationnaire du signal à analyser ne permet pas d'appliquer les critères habituels fondés, par exemple, sur la multiplicité des valeurs propres de la matrice d'autocorrélation, ou sur le critère dit d'Akaïke (en abrégé AIC) ou d'autres (comme le critère MDL). Ces critères sont asymptotiques en ce sens que le choix retenu est d'autant plus probable que le nombre d'échantillons est important. L'invention retient un critère plus avantageux consistant à rendre maximum une probabilité a posteriori d'existence du modèle. C'est le critère dit MAP ("Maximum A Posteriori"). La fonction à minimiser peut s'exprimer par la quantité suivante :

$$\text{Log}\ (\hat{\sigma}_p^2) + \frac{5p}{N}\ \text{Log}(N) \qquad\qquad (12)$$

où $\hat{\sigma}$ est la puissance estimée du bruit, N est le nombre d'échantillons pris en compte et p est l'ordre du modèle.

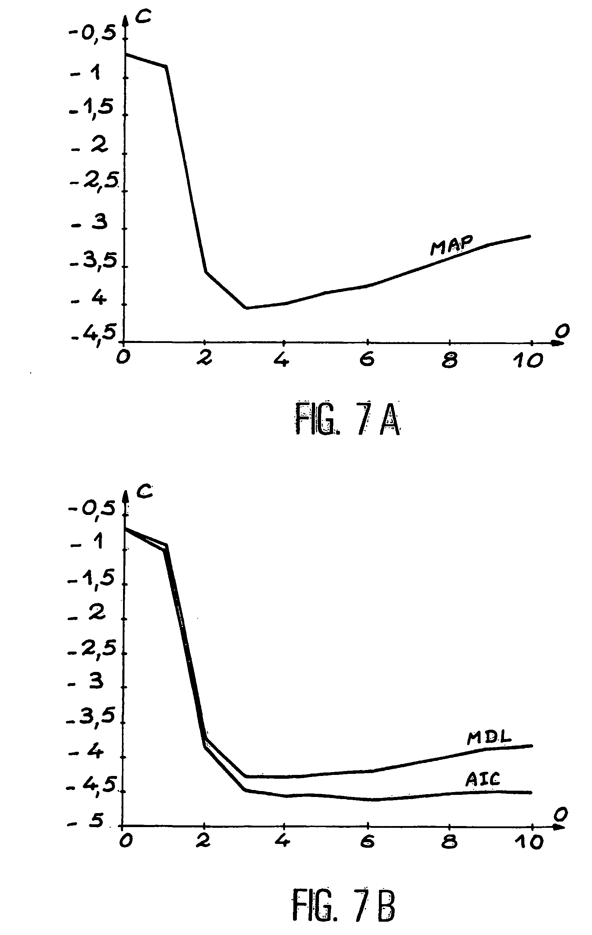

La figure 7A montre un exemple des variations de cette quantité (portée en ordonnées) en fonction de l'ordre 0 (porté en abscisses) pour une composante sinusoïdale avec un rapport signal sur bruit de 20 dB avec 128 échantillons pris en compte. L'ordre correspondant au minimum est égal à 3. A titre d'exemple, la figure 7B donne les variations des quantités correspondant aux critères AIC et MDL. On voit que le choix de l'ordre y est plus incertain.

# EP 1 410 240 B1

**D2. Estimation à partir d'une loi sur les modules**

Un mode a une réalité physique si le module du pôle associé est très proche de l'unité, alors que le module d'un mode associé à du bruit est en retrait dans le cercle de rayon unité. Il est donc en principe possible de distinguer les pôles en triant les modules des pôles. Cette distinction est d'autant plus facile que le rapport signal sur bruit est grand. Pour un rapport donné, la probabilité qu'un zéro du polynôme AR ayant un module déterminé corresponde effectivement à un mode physique est une fonction de la valeur de ce module. On peut définir une loi générale de distribution des modules qui permet d'apprécier, pour une valeur donnée du rapport signal sur bruit, la probabilité d'existence d'un mode physique selon la valeur trouvée pour le module.

Le Demandeur a trouvé que la loi de densité de probabilité obéit à une loi du type:

$$p(x) = \frac{x^{a-1} e^{-x/b}}{b^a \Gamma(a)} \tag{13}$$

où $\underline{a}$ et $\underline{b}$ sont deux paramètres et où $r(a)$ est la fonction gamma, x étant positif. La probabilité s'exprime alors par l'intégrale de cette densité prise entre 0 et la valeur du module, soit :

$$P[x \le x_0] = \int_0^{x_0} \frac{x^{a-1} e^{-x/b}}{b^a \Gamma(a)} \, dx \tag{14}$$

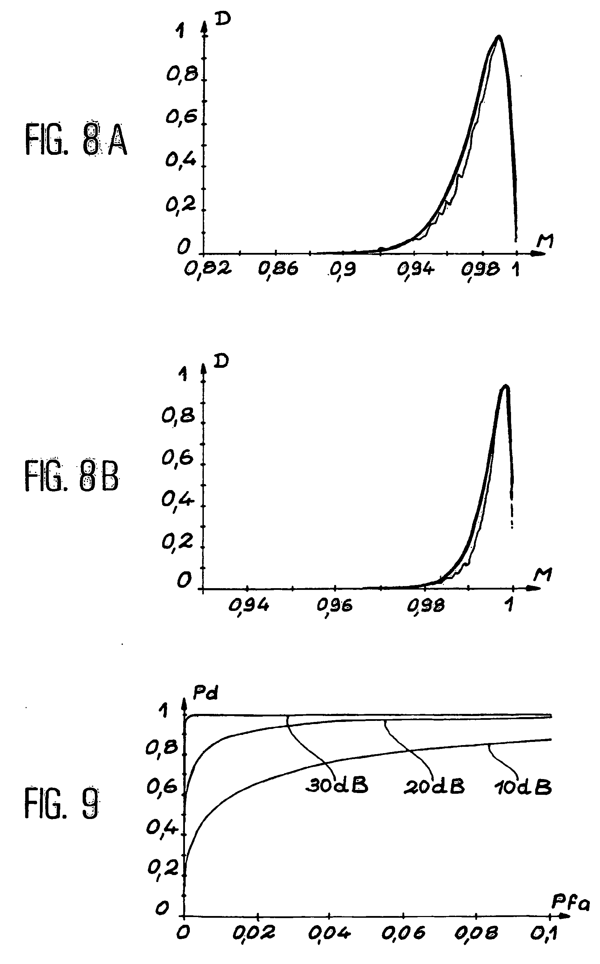

Les courbes des figures 8A et 8B montrent l'évolution de cette densité respectivement pour a=1,9292 et b=0,0108 avec un rapport signal sur bruit de 20dB (figure 8A) et pour a=1,5234 et b=0,0034, avec un rapport signal sur bruit de 30dB (figure 8B). L'axe des ordonnées donne la valeur de la densité de probabilité pour toute valeur du module portée en abscisses.

On peut définir une probabilité de fausse alarme (Pfa) comme étant la probabilité de considérer qu'il existe un mode alors que le module estimé est inférieur à un certain seuil $s_e$. L'acceptation d'un certain taux d'erreur permet de fixer une probabilité de fausse alarme et d'en déduire la probabilité de détection d'un mode. La figure 9 donne ainsi les variations de cette probabilité de détection Pd en fonction de la probabilité de fausse alarme Pfa admise, pour différentes valeurs du rapport signal sur bruit exprimé en dB (respectivement 10dB, 20dB et 30dB du bas en haut). Par exemple, pour une Pfa de 1% (0,01 sur l'axe des abscisses) et pour un rapport signal sur bruit de 20dB, la probabilité de détection théorique est d'environ 88% alors que l'expérience donne environ 85%. L'accord entre théorie et pratique est donc satisfaisant même si le modèle surestime légèrement la probabilité.

**E) Calcul des racines du modèle**

Le polynôme A(z) retenu peut être mis sous une forme faisant mieux apparaître ses zéros :

$$A(z) = \prod_{i=1}^{p} (1 - z_i z^*) \tag{15}$$

où les $z_i = P_i \exp(j2\pi f_i)$ sont les p zéros. Les solutions sont conjuguées deux à deux puisque les paramètres $a_k$ sont réels pour un processus physique. Le calcul des zéros $z_i$ peut s'effectuer par la méthode dite de Bairstow. Il n'est pas nécessaire de calculer tous les zéros. Si le temps de traitement est compté (contrainte liée au temps réel), on peut se contenter de certains zéros.

Chaque zéro possède un module $\rho_i$ et une phase $2\pi f_i$. Chaque zéro peut donc être représenté par un point dans le plan complexe. Le module $\rho_i$ du pôle $z_i$ mesure l'acuité de la résonance : plus il est proche de l'unité, plus la résonance est marquée et meilleure est la probabilité qu'il s'agisse d'un phénomène ayant une réalité physique. En revanche, pour un module $\rho_i$ très inférieur à l'unité correspond soit à un mode physique fortement amorti, soit à du bruit.

**F) Calcul des composantes et suivi**

La phase $\theta_i$ d'une racine est liée à la fréquence $f_i$ du mode correspondant par :

$$\theta_i \ = \ 2\pi f_i/f_e. \tag{16}$$

Connaissant la phase de la racine, on a donc immédiatement la fréquence $f_i$ :

$$f_i = \frac{\theta_l f_e}{2\pi} \tag{17}$$

Chaque mode de fréquence $f_i$ correspond à une composante sinusoïdale de la forme $V_i \sin (2\pi f_i t + \varphi_i)$.

Il reste à suivre l'évolution des fréquences fondamentales dans le temps afin d'estimer ensuite les amplitudes. Chaque mode étant défini par sa fréquence et son énergie, il peut être représenté par un point dans un espace à 3 dimensions temps-fréquence-énergie.

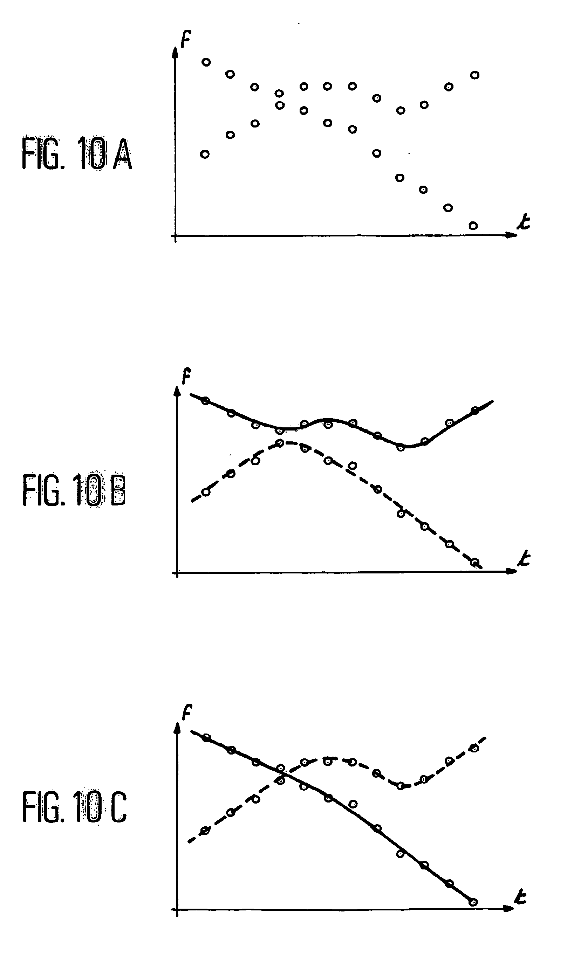

La figure 10A montre ainsi les points représentatifs de deux modes dans un plan temps-fréquence (t,f). Chaque point correspond à un instant d'échantillonnage. Il est clair qu'une difficulté d'interprétation apparaît dans la zone où les deux modes se rejoignent :

- Soit l'on considère que le mode supérieur devient le mode inférieur (et vice versa) parce que sa fréquence ne cesse de décroître (ou de croître) (Fig. 10B).

- Soit l'on considère que les modes ne se croisent pas et que le mode supérieur reste au-dessus du mode inférieur (figure 10C).

Pour trancher, on calcule une fonction qui reflète le lien entre chaque point et les points précédents et l'on estime, à chaque instant, quel est le lien le plus probable compte tenu de l'histoire du mode. On peut, par exemple, calculer le carré de la distance entre un point obtenu à un instant donné et les points obtenus à l'instant précédent et considérer que l'ensemble des points minimisant une fonction pondérée de ces carrés correspond à un même mode.

La pondération peut être exponentielle avec un facteur d'oubli qui privilégie les derniers points acquis.

Pour calculer les amplitudes, on calcule les $V_i$ tels que la somme des erreurs quadratiques suivante soit minimale :

$$\left[ \sum_i V_i \, \sin(2\pi\hat{f}_l + \varphi_i) - E_n \right]^2 \tag{18}$$

où $E_n$ est la valeur de l'échantillon du signal à analyser et $V_i \sin (2\pi\hat{f}_1 + \varphi_i)$ est la valeur de l'échantillon de la composante sinusoïdale. On peut utiliser pour ce faire diverses méthodes connues (méthode des moindres carrés, de Kalman, etc...).

En variante, on ne refait pas tous les calculs à chaque instant d'échantillonnage sachant que les $A_i$ sont connus à l'instant antérieur. Il suffit de calculer les variations des $A_i$ qui conservent le minimum de la somme quadratique des erreurs.

A l'issue de cette opération de suivi et d'estimation de chacune des amplitudes, on est donc en possession d'un ensemble de paramètres (autrement dit d'un "vecteur"), comprenant les fréquences $f_i$, les modules $\rho_i$ et les amplitudes $V_i$ des diverses composantes du signal analysé. Ce traitement se rapporte à une sous-bande. L'analyse du signal s'obtient donc finalement en rassemblant les résultats obtenus pour les différentes sous-bandes.

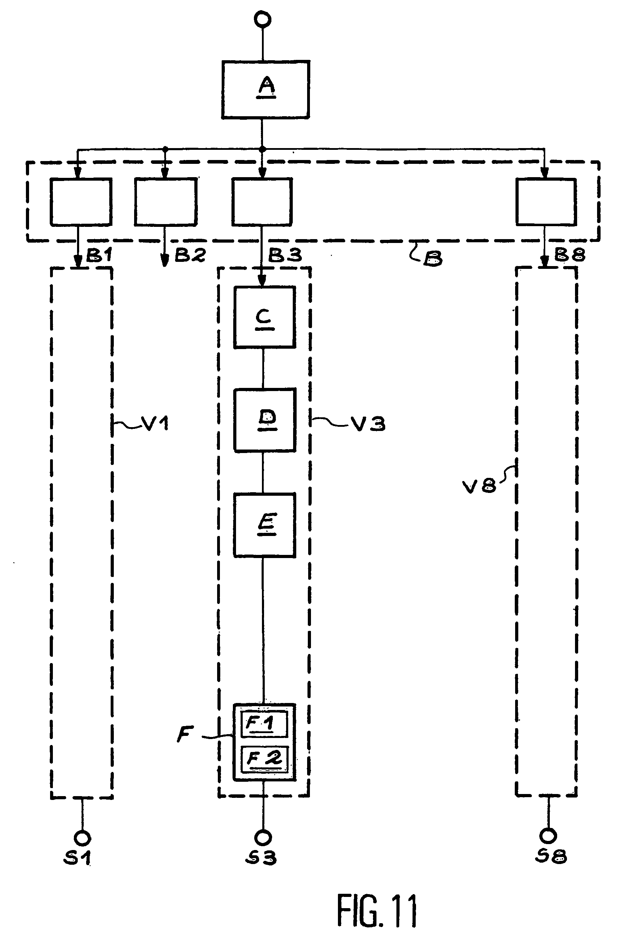

La figure 11 montre un schéma synoptique d'un circuit d'analyse qui met en oeuvre le procédé qui vient d'être décrit. Les blocs fonctionnels de ce circuit sont référencés par des lettres (A, B, C, ..., F) qui correspondent aux différentes opérations (A, B, C, ..., F) du procédé. On trouve ainsi successivement :

A) un circuit A d'échantillonnage du signal à une fréquence (fe) au moins égale à deux fois la plus haute fréquence prévue et on numérise les échantillons obtenus,

B) un circuit B de décomposition du signal échantillonné et numérisé en sous-bandes comprenant une batterie de filtres numériques ayant des bandes passantes adjacentes ; sur la figure 11 ce circuit comprend 8 filtres numériques correspondant à 8 sous-bandes $B_1$, $B_2$, $B_3$, ..., $B_8$ ;

C) pour chaque sous-bande, (par exemple pour la sous-bande B3), un moyen C de modélisation du signal, ce moyen comprenant un filtre autorégressif dont la fonction de transfert est 1/A(z), où A(z) est un polynôme de la variable complexe z=exp(j2πf/fe), ce moyen mettant en oeuvre une méthode adaptative récursive en temps et en ordre, et calculer tous les polynômes A(z) ayant un degré compris entre 1 et une valeur maximale choisie à l'avance,

D) un moyen D pour estimer l'ordre du modèle et pour retenir parmi tous les polynômes calculés celui qui possède cet ordre,

E) un circuit E de calcul mettant en oeuvre un algorithme récursif, apte à calculer au moins certaines racines complexes du polynôme choisi,

F) des moyens F1, F2 pour déterminer, à partir de la phase des racines obtenues, les fréquences correspondantes, et pour effectuer un suivi des composantes sinusoïdales, ces moyens étant aptes à calculer, dans un plan fréquence-amplitude, le carré de la distance séparant un point courant correspondant à une composante à un instant d'échantillonnage aux points obtenus à l'instant d'échantillonnage précédent, à faire correspondre au point courant le point antérieur qui minimise ce carré et à lier les différents points en minimisant une fonction pondérée de ces carrés, ces moyens étant aptes, à partir des fréquences, à rechercher les amplitudes des composantes sinusoïdales ayant ces fréquences et qui minimisent l'erreur quadratique entre la somme de ces composantes et le signal à analyser.

Tous ces moyens C, D, E, F, constituent une voie de traitement $V_i$, ..., $V_2$, ..., $V_8$, chacune donnant l'amplitude des diverses composantes sinusoïdales dans la sous-bande considérée ($B_1$, ..., $B_8$). Les sorties $S_1$, ..., $S_8$ de ces voies peuvent être combinées ensuite pour rassembler les résultats.

## Revendications

1. Procédé d'analyse fréquentielle en temps réel d'un signal non stationnaire, comprenant les opérations suivantes :

   A) on échantillonne le signal à une fréquence (fe) au moins égale à deux fois la plus haute fréquence prévue et on numérise les échantillons obtenus,

   B) on décompose le signal échantillonné et numérisé en sous-bandes en appliquant les échantillons à une batterie de filtres numériques ayant des bandes passantes adjacentes,

   C) on modélise le signal dans chaque sous-bande par un filtre autorégressif, dont la fonction de transfert est 1/A(z), où A(z) est un polynôme de la variable complexe z=exp(j2πf/fe), en mettant en oeuvre une méthode adaptative récursive en temps et en ordre, on calcule tous les polynômes A(z) ayant un degré compris entre 1 et une valeur maximale choisie à l'avance,

   D) on estime l'ordre du modèle et on retient parmi tous les polynômes calculés celui qui possède cet ordre,

   E) on calcule, par un algorithme récursif, au moins certaines racines complexes du polynôme choisi,

   F) à partir de la phase des racines obtenues, on détermine les fréquences correspondantes et, à partir des fréquences, le carré de la distance séparant un point courant correspondant à une composante à un instant d'échantillonnage aux points obtenus à l'instant d'échantillonnage précédent, on fait correspondre au point courant le point antérieur qui minimise ce carré et on lie les différents points en minimisant une fonction pondérée de ces carrés et on recherche les amplitudes des composantes sinusoïdales ayant ces fréquences et qui minimisent l'erreur quadratique entre la somme de ces composantes et le signal à analyser, on effectue un suivi des composantes sinusoïdales en calculant, dans un plan fréquence-amplitude.

2. Procédé selon la revendication 1, dans lequel, après avoir décomposé le signal échantillonné et numérisé en sous-bandes, on étale en fréquence chaque sous-bande par décimation des échantillons.

3. Procédé selon la revendication 1, dans lequel on décompose le signal en sous-bandes par une batterie de filtres orthogonaux à support compact (à réponse impulsionnelle finie).

4. Procédé selon la revendication 1, dans lequel on utilise une cascade d'étages de filtrage possédant chacun $2^\kappa$ filtres où k est le rang de l'étage.

5. Procédé selon la revendication 1, dans lequel on décompose le signal en sous-bandes par des filtres à support non compact (à réponse impulsionnelle infinie).

6. Procédé selon la revendication 5, dans lequel les filtres sont orthogonaux.

7. Procédé selon la revendication 5, dans lequel on utilise des filtres non orthogonaux suivis de filtres de Hilbert.

**8.** Procédé selon la revendication 1, dans lequel, dans l'opération D, on estime l'ordre du modèle à partir d'un critère fondé sur le maximum a posteriori (MAP) de la probabilité d'existence du modèle.

**9.** Procédé selon la revendication 1, dans lequel, dans l'opération D, à partir de la connaissance des modules des racines des polynômes, on évalue la probabilité d'existence de modes correspondant à ces modules par rapport à une loi de distribution de probabilité choisie à l'avance, et à partir du nombre de modes probables ainsi évalué on en déduit l'ordre du polynôme modélisant le signal à analyser.

**10.** Procédé selon la revendication 9, dans lequel la loi de distribution est une loi gamma à deux paramètres.

**11.** Circuit d'analyse fréquentielle en temps réel d'un signal non stationnaire pour la mise en oeuvre du procédé selon la revendication 1, comprenant :

A) un circuit d'échantillonnage du signal à une fréquence (fe) au moins égale à deux fois la plus haute fréquence prévue et on numérise les échantillons obtenus,

B) un circuit de décomposition du signal échantillonné et numérisé en sous-bandes comprenant une batterie de filtres numériques ayant des bandes passantes adjacentes,

C) pour chaque sous-bande, un moyen de modélisation du signal comprenant un filtre autorégressif dont la fonction de transfert est 1/A(z), où A(z) est un polynôme de la variable complexe z=exp(j2πf/fe), ce moyen mettant en oeuvre une méthode adaptative récursive en temps et en ordre, et étant apte à calculer tous les polynômes A(z) ayant un degré compris entre 1 et une valeur maximale choisie à l'avance,

D) un moyen pour estimer l'ordre du modèle et pour retenir parmi tous les polynômes calculés celui qui possède cet ordre,

E) un circuit de calcul mettant en oeuvre un algorithme récursif, apte à calculer au moins certaines racines complexes du polynôme choisi,

F) des moyens pour déterminer, à partir de la phase des racines obtenues, les fréquences correspondantes, pour effectuer un suivi des composantes sinusoïdales, ces moyens étant aptes à calculer, dans un plan fréquence-amplitude, le carré de la distance séparant un point courant correspondant à une composante à un instant d'échantillonnage aux points obtenus à l'instant d'échantillonnage précédent, à faire correspondre au point courant le point antérieur qui minimise ce carré et à lier les différents points en minimisant une fonction pondérée de ces carrés, ces moyens étant aptes, à partir des fréquences, à rechercher les amplitudes des composantes sinusoïdales ayant ces fréquences et qui minimisent l'erreur quadratique entre la somme de ces composantes et le signal à analyser.

**Claims**

**1.** Method for analysing the frequency in real-time of a non-stationary signal, comprising the following operations:

A) the signal is sampled at a frequency (fe) at least equal to twice the highest expected frequency and the samples obtained are digitized,

B) the sampled and digitized signal is broken up into sub-bands by applying the samples to a bank of digital filters with adjacent pass bands,

C) the signal is modelled in each sub-band by an auto-regressive filter, the transfer function of which is 1/A(z), where A(z) is a polynomial of the complex variable z = exp(j2πf/fe) by implementing an adaptive method that is recursive in time and in order, all the polynomials A(z) with a degree between 1 and a maximum value selected in advance are calculated,

D) the order of the model is estimated and of all the calculated polynomials the one retained is the one having this order,

E) using a recursive algorithm, at least some complex roots of the polynomial selected are calculated,

F) from the phase of the roots obtained, the corresponding frequencies are detrmined, and from the frequencies, the square of the distance separating a current point corresponding to a component at one sampling instant from the points obtained at the previous sampling instant, the previous point which minimises this square is made to correspond to the current point and the different points are connected by minimising a weighted function of these squares and the amplitudes are sought for the sinusoidal components that have these frequencies and which minimise the quadratic error between the sum of these components and the signal for analysis, the sinusoidal components are monitored by calculating, in a frequency-amplitude plane.

2. Method according to claim 1, wherein, after the sampled and digitized signal is broken up into sub-bands, each sub-band is spread in frequency by decimation of the samples.

3. Method according to claim 1, wherein the signal is broken up into sub-bands by a bank of compact support (finite impulse response) orthogonal filters.

4. Method according to claim 1, wherein a cascade of filtering stages is used each possessing $2^k$ filters where k is the rank of the stage.

5. Method according to claim 1, wherein the signal is broken up into sub-bands by non-compact support (infinite impulse response) filters.

6. Method according to claim 5, wherein the filters are orthogonal.

7. Method according to claim 5, wherein non-orthogonal filters are used followed by Hilbert filters.

8. Method according to claim 1, wherein in the operation D, the model order is estimated from a criterion based on the maximum a posteriori (MAP) of the model existence probability.

9. Method according to claim 1, wherein, in the operation D, from the knowledge of the polynomial root modules, the mode existence probability corresponding to these modules is evaluated relative to a probability distribution law selected in advance, and from the number of probable modes thus evaluated the order of the polynomial modelling the signal for analysis is deduced.

10. Method according to claim 9, wherein the distribution law is a two parameter gamma law.

11. Circuit for analysing the frequency in ral-time of a non-stationary signal for implementing the method according to claim 1, comprising:

   A) a circuit for sampling the signal at a frequency (fe) at least equal to twice the highest expected frequency and the samples obtained are digitized,
   B) a circuit for breaking up the sampled and digitized signal into sub-bands including a bank of digital filters with adjacent pass bands,
   C) for each sub-band, a signal modelling means including an auto-regressive filter, the transfer function of which is 1/A(z), where A(z) is a polynomial of the complex variable z=exp (j2πf/fe), this means implementing an adaptive method recursive in time and in order, and being able to calculate all the polynomials A(z) with a degree between 1 and a maximum value selected in advance,
   D) a means for estimating the model order and for retaining among all the polynomials calculated the one which possesses this order,
   E) a calculation circuit implementing a recursive algorithm, able to calculate at least some complex roots of the selected polynomial,
   F) means for determining, from the phase of the roots obtained, the corresponding frequencies, and for monitoring the sinusoidal components, these means being able to calculate, in a frequency-amplitude plane, the square of the distance separating a current point corresponding to a component at one sampling instant from the points obtained at the previous sampling insant, to make the previous point which minimises this square corresponding to the current point and to relae the different points by minimising a weighted function of these squares, these means being able, from the frequencies, to seek the amplitudes of the sinusoidal components having these frequencies and which minimises the quadratic error between the sum of these components and the signal for analysis.

**Patentansprüche**

1. Echtzeit-Frequenzanalyseverfahren eines nichtstationären Signals, umfassend die folgenden Vorgänge:

   A) Abtasten des Signals mit einer Frequenz (fe), die zumindest gleich dem Doppelten der höchsten vorgesehenen Frequenz ist, und Numerieren der erhaltenen Abtastwerte,
   B) Zerlegen des abgetasteten und numerisierten Signals in Nebenbänder durch Anlegen der Abtastwerte an eine Batterie aus numerischen Filtern mit aneinandergrenzenden Passbändern,

C) Modellieren des Signals in jedem Nebenband durch ein autoregressives Filter, dessen Übertragungsfunktion 1/A(z) beträgt, wobei A (z) ein Polynom der komplexen Variablen z = exp (j2πf/fe) ist, in dem ein adaptives, in der Zeit und der Rangfolge rekursives Verfahren eingesetzt wird, Berechnen aller Polynome A(z) mit einem zwischen 1 und einem vorher gewählten Maximalwert liegenden Grad,

D) Schätzen der Rangfolge des Modells und Einbehalten desjenigen Polynoms aller berechneten Polynome, welches diese Rangfolge aufweist,

E) Berechnen, durch einen rekursiven Algorithmus, mindestens bestimmter komplexer Wurzeln des gewählten Polynoms,

F) Bestimmen, anhand der Phase der erhaltenen Wurzeln, der entsprechenden Frequenzen, und anhand der Frequenzen, des Quadrats des Abstands, welcher einen aktuellen Punkt, der einer Komponente in einem Abtastaugenblick entspricht, von den im vorangehenden Abtastaugenblick erhaltenen Punkten trennt, in Übereinstimmung bringen des aktuellen Punkts mit dem vorherigen Punkt, welcher dieses Quadrat minimiert, und Verbinden der verschiedenen Punkte, indem eine gewichtete Funktion dieser Quadrate minimiert wird, und Ermitteln der Amplituden der Sinus-Komponenten mit diesen Frequenzen, welche den Quadratfehler zwischen der Summe dieser Komponenten und dem zu analysierenden Signal minimieren, sowie Ausführen einer Fortschreibung der Sinus-Komponenten, indem in einer Frequenz-Amplituden-Ebene gerechnet wird.

2. Verfahren nach Anspruch 1, wobei nach dem Zerlegen des abgetasteten und in Nebenbänder numerisierten Signals jedes Nebenband durch Dezimieren der Abtastwerte in der Frequenz gespreizt wird.

3. Verfahren nach Anspruch 1, wobei das Signal in Nebenbänder durch eine orthogonale Filterbatterie mit kompaktem Träger (mit finiter Impulsantwort) zerlegt wird.

4. Verfahren nach Anspruch 1, wobei eine Filterstufenkaskade verwendet wird, die jeweils $2^k$ Filter aufweist, wobei k der Rang der Stufe ist.

5. Verfahren nach Anspruch 1, wobei das Signal durch Filter mit nicht-kompaktem Träger (mit infiniter Impulsantwort) in Nebenbänder zerlegt wird.

6. Verfahren nach Anspruch 5, wobei die Filter orthogonal sind.

7. Verfahren nach Anspruch 5, wobei nicht-orthogonale Filter, denen Hilbert-Filter folgen, verwendet werden.

8. Verfahren nach Anspruch 1, wobei beim Vorgang D die Rangfolge des Modells anhand eines Kriteriums geschätzt wird, das auf dem Maximum a posteriori (MAP) der Wahrscheinlichkeit der Existenz des Modells begründet ist.

9. Verfahren nach Anspruch 1, wobei beim Vorgang D anhand der Kenntnis der Module der Polynomwurzeln die Wahrscheinlichkeit der Existenz von Moden eingeschätzt wird, welche diesen Modulen in Bezug auf ein Verteilungsgesetz der vorab gewählten Wahrscheinlichkeit entsprechen, und anhand der Anzahl von wahrscheinlichen, auf diese Weise eingeschätzten Moden die Rangfolge des das zu analysierende Signal modellierenden Polynoms abgeleitet wird.

10. Verfahren nach Anspruch 9, wobei das Verteilungsgesetz ein Gamma-Gesetz mit zwei Parametern ist.

11. Schaltung zur Echtzeit-Frequenzanalyse eines nichtstationären Signals für die Anwendung des Verfahrens nach Anspruch 1, mit:

A) einer Abtastschaltung des Signals mit einer Frequenz (fe), die zumindest gleich dem Doppelten der höchsten vorgesehenen Frequenz ist, und Numerieren der erhaltenen Abtastwerte,

B) einer Schaltung zum Zerlegen des abgetasteten und numerisierten Signals in Nebenbänder, umfassend eine Batterie aus numerischen Filtern mit aneinandergrenzenden Passbändern,

C) für jedes Nebenband, einem Modellisiermittel des Signals, das ein autoregressives Filter aufweist, dessen Übertragungsfunktion 1/A(z) beträgt, wobei A (z) ein Polynom der komplexen Variablen z = exp (j2πf/fe) ist, wobei dieses Mittel ein adaptives, in der Zeit und der Rangfolge rekursives Verfahren einsetzt, und alle Polynome A(z) mit einem zwischen 1 und einem vorab gewählten Maximalwert liegenden Grad berechnen kann,

D) einem Mittel zum Schätzen der Rangfolge des Modells und zum Einbehalten unter allen berechneten Polynome desjenigen, welches diese Rangfolge aufweist,

E) einer Rechenschaltung, die einen rekursiven Algorithmus anwendet, der zumindest bestimmte komplexe Wurzeln des gewählten Polynoms berechnen kann,

F) Mitteln zum Bestimmen, anhand der Phase der erhaltenen Wurzeln, der entsprechenden Frequenzen, um eine Fortschreibung der Sinus-Komponenten durchzuführen, wobei diese Mittel in einer Frequenz-Amplituden-Ebene das Quadrat des Abstands berechnen können, welcher einen aktuellen Punkt, der einer Komponente in einem Abtastaugenblick entspricht, von denjenigen Punkten trennt, die in dem Augenblick der vorangehenden Abtastung erhalten wurden, die den vorangehenden Punkt, welcher dieses Quadrat minimiert, mit dem aktuellen Punkt zur Übereinstimmung bringen, sowie die die verschiedenen Punkte miteinander verbinden, indem eine gewichtete Funktion dieser Quadrate minimiert wird, wobei diese Mittel anhand der Frequenzen die Amplituden derjenigen Sinus-Komponenten ermitteln können, welche diese Frequenzen aufweisen und den Quadratfehler zwischen der Summe dieser Komponenten und dem zu analysierenden Signal minimieren.

FIG. 1A

FIG. 1B

EP 1 410 240 B1

FIG. 2

FIG. 3

FIG. 4

FIG. 5

FIG. 6

FIG. 7 A

FIG. 7 B

FIG. 8 A

FIG. 8 B

FIG. 9

FIG. 10 A

FIG. 10 B

FIG. 10 C

FIG. 11

**EP 1 410 240 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BONACCI D ; MAILHES C ; DJURIC P M.** Improving frequency resolution for correlation-based spectral estimation methods using subband decomposition. *Proceedings of International Conference on Acoustics, Speech and Signal Processing,* 06 Avril 2003, vol. 6, VI - 329-332